# EUROPEAN PATENT SPECIFICATION

(11) **EP 1 717 658 B1**
(45) Date of publication and mention of the grant of the patent: **12.03.2014**
(21) Application number: 05028565.9
(22) Date of filing: 28.12.2005
(51) Int. Cl.: G05B 19/427, B25J 9/16, A47L 11/00

(54) **Robot system capable of specifying moving area**
Robotersystem mit Angabe des Bewegungsbereiches
Système robotisé capable de spécifier une zone en mouvement

(30) Priority: 25.04.2005 KR 2005034137
(43) Date of publication of application: 02.11.2006
(73) Proprietor: LG Electronics Inc., Seoul (KR)
(72) Inventor: Jung, Il-kyun, Siheung-dong Geumcheon-gu Seoul (KR)
(74) Representative: Vossius & Partner

(56) References cited:
- US-A- 5 111 401
- US-A- 5 995 884
- US-A1- 2002 060 542
- US-A1- 2002 153 184
- US-A1- 2004 016 077
- US-A1- 2004 111 184
- US-A1- 2004 168 148
- US-B1- 6 459 955
- US-B1- 6 764 373

## Description

The present invention relates to a self-moving robot system, and more particularly to a self-moving robot system which can specify a moving area using information printed on flooring and move within the moving area while tracking the printed information.

Robots have been developed for industrial purposes and used as part of factory automation. Robots also have been used, in place of human beings, to collect information in extreme environments that human beings cannot access. Robot technologies have been rapidly developed as applied to the most advanced space development industries. Recently, even human-friendly household robots have been developed. A typical example of the human-friendly household robot is a cleaning robot system.

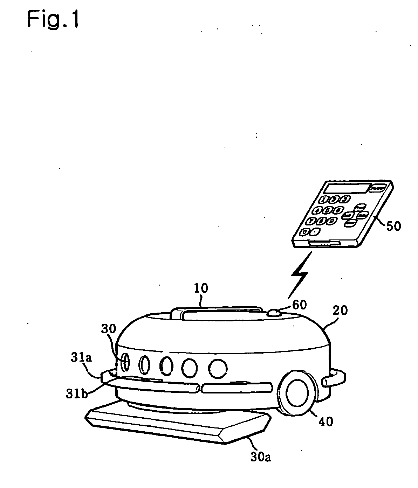

FIG. 1 is an external view of a general cleaning robot.

As shown in FIG. 1, first sensor units 30 are provided on front and rear portions of a robot body housing 20 of the general cleaning robot. The first sensor units 30 detect obstacles by sending ultrasonic waves and receiving ultrasonic waves reflected from obstacles. About two contact bars 31a are provided on each of the front and rear portions of the robot body housing 20 under the first sensor units 30. Transfer members 31b, which are coupled to the contact bars 31a, extend into the interior of the housing 20. The contact bars 31a are curved along an outer cylindrical surface of the housing 20. The contact bars 31a are also referred to as "contact sensors" since they sense obstacles that they directly contact.

Drive wheels 40 are provided on lower left and right portions of the housing 20 of the general cleaning robot so that the cleaning robot can move freely. Automatic movement of the cleaning robot is achieved by a remote control signal which is transmitted from a remote controller 50, received by a remote control receiver 60 on the housing 20, and transferred to a controller that controls the operation of motors for driving the wheels 40.

A method employing a magnetic tape and a method employing a separate infrared beam transmitter are used to limit automatic movement of the general cleaning robot configured as described above.

The former method limits movement of the robot body by attaching a magnetic tape to flooring and attaching a hall sensor to the cleaning robot body. The latter method limits movement of the robot body in such a manner that an infrared beam transmitter is used to transmit an infrared beam and the robot body is prevented from moving in the opposite direction to the direction of the infrared beam.

However, the former method must use the magnetic tape. This increases the cost of the cleaning robot system. There are also many restrictioris in installing the magnetic tape since the magnetic tape affects electrical household appliances, electronic cards, etc.

The latter method is economically inefficient since it requires an additional purchase of an infrared beam transmitter, and batteries of the infrared beam transmitter must also be periodically replaced.

Therefore, the present invention has been made in view of the above problems, and it is an object of the present invention to provide a self-moving robot system according to the appended claim 1 and a method of operating such a robot system according to the appended claim 8. The claimed system allows a user to easily set a moving area using a remote controller without requiring separate equipment such as an infrared beam transmitter and without causing inconvenience to the user so that a robot body can move within the set moving area.

It is another object of the present invention to provide a self-moving robot system wherein information of coordinates printed on flooring is acquired and transmitted to a device, which can be used as a remote controller, and a robot body moves within a defined moving area transmitted from the device.

It is yet another object of the present invention to provide a self-moving robot system wherein a cleaning area is specified using a portable device having a local area communication function and a robot body cleans the cleaning area while moving within the cleaning area.

In accordance with one aspect of the present invention, the above and other objects can be accomplished by the provision of a self-moving robot system comprising a printed information reader for reading coordinate information printed on flooring; a moving area coordinate information extraction unit for extracting moving area coordinate information from a wirelessly received remote control signal; a moving start point setting unit for locating an adjacent coordinate information element from among a plurality of coordinate information elements included in the extracted moving area coordinate information and setting the located coordinate information element as a moving start point; and a coordinate information tracking unit for controlling the operation of a motor so that a robot body moves to the moving start point and moves within the moving area while tracking the coordinate information present in the moving area.

Since the robot body locates and moves to a coordinate information element near its current position from among a plurality of coordinate information elements included in moving area coordinate information transmitted from the remote controller, and moves within the moving area while tracking the coordinate information elements present in the moving area, it is possible to conveniently limit movement of the robot body without requiring separate equipment and without causing inconvenience to the user.

In accordance with another aspect of the present invention, the self-moving robot system further comprises a flooring coordinate information extraction unit for extracting information (hereinafter referred to as total coordinate information (nXm)) of coordinates printed vertically and horizontally on the flooring from the coordinate information read through the printed information reader; and a flooring coordinate information transmitter for transmitting the extracted total coordinate information to the remote controller through a wireless communication unit.

Since total coordinate information including the total number of coordinate information elements printed vertically and horizontally on flooring can be transmitted to the remote controller, the remote controller can store the total coordinate information in a memory and use it when setting a moving area, so that it is possible to appropriately adapt to situations such as replacement of the flooring.

In addition, since the total coordinate information can be wirelessly transmitted to a portable device capable of communicating with the robot body, the portable device can be used as a remote controller capable of setting a moving area, so that it is possible to normally control movement of the robot body, in spite of loss or failure of the remote controller.

The above and other objects, features and other advantages of the present invention will be more clearly understood from the following detailed description taken in conjunction with the accompanying drawings, in which:
FIG. 1 is an external view of a general cleaning robot system;
FIG. 2 is a block diagram of a self-moving robot system according to an embodiment of the present invention;
FIG. 3 illustrates the positions of barcodes displayed on a display unit of a remote controller 100 shown in FIG. 2;
FIG. 4 illustrates the positions of barcodes actually printed on flooring according to an embodiment of the present invention; and
FIG. 5 illustrates how the self-moving robot system according to the embodiment of the present invention reads barcodes printed on the flooring.

Now, preferred embodiments of the present invention will be described in detail with reference to the accompanying drawings. In the following description of the present invention, a detailed description of known functions and configurations incorporated herein will be omitted when it may obscure the subject matter of the present invention.

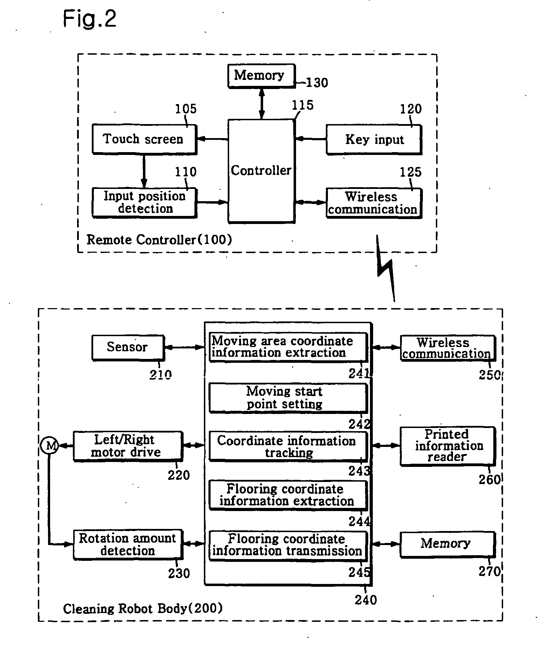

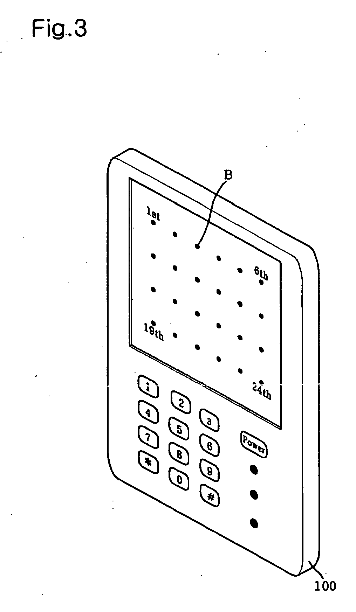

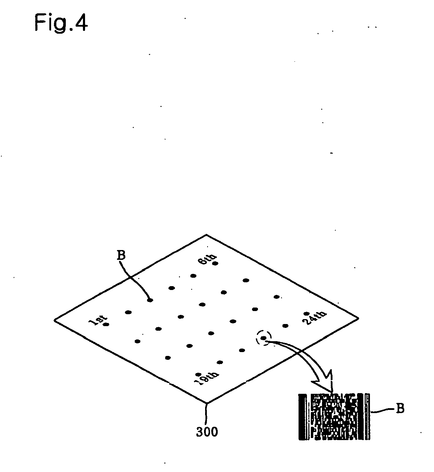

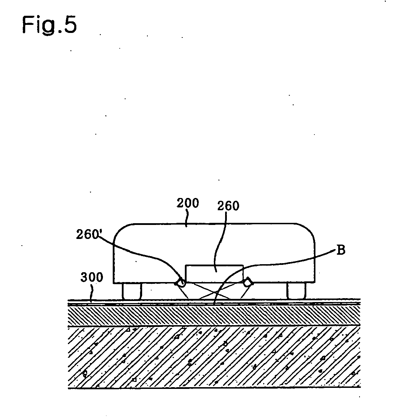

FIG. 2 is a block diagram of a self-moving robot system (more particularly, a cleaning robot system) according to an embodiment of the present invention. FIG. 3 shows the positions of barcodes displayed on a display unit of a remote controller 100 shown in FIG. 2, and FIG. 4 shows the positions of barcodes actually printed on flooring according to an embodiment of the present invention. FIG. 5 shows how the self-moving robot system according to the embodiment of the present invention reads barcodes printed on the flooring.

As shown in FIG. 2, the cleaning robot system according to the embodiment of the present invention largely includes a cleaning robot body 200 and a remote controller 100 which remotely controls the cleaning robot body 200.

The remote controller 100 may be an accessory of the cleaning robot body 200 or may be a portable/mobile communication terminal such as a mobile phone or a PDA having a local area communication module such as a Bluetooth module. In some cases, the remote controller 100 may be a home network device such as a digital TV or a central interphone which has a wireless LAN module or a Zigbee module and thus can communicate with the robot body 200.

As shown in FIG. 2, the remote controller 100 basically includes a wireless communication module 125, a memory 130, a display unit, a data input unit, and a controller 115. The wireless communication module 125 communicates with the robot body 200. The memory 130 stores information of coordinates printed on flooring. The display unit displays the coordinate information. The data input unit allows a user to set a moving area. The controller 115 controls these components to store and display the coordinate information and to transmit coordinate information of a moving area selected by the user.

For example, the wireless communication module 125 may be embodied as an infrared transmitter, a wireless local area communication module such as a Bluetooth module, a wireless LAN module, or a Zigbee module, or the like, depending on the system. The coordinate information stored in the memory 130 is specifically information about coordinate information elements printed vertically and horizontally (i.e., in matrix form) on the flooring. More specifically, the coordinate information is total flooring coordinate information (n×m), which is a value input or changed by a manager and stored in the memory 130 or a value transmitted from the robot body 200 and stored in the memory 130. In FIG. 2, the display unit for displaying the coordinate information is exemplified by a touch screen 105, and the data input unit for setting the moving area is exemplified by a key input unit 120 including a number of buttons together with the touch screen 105. An input position detection unit 110, which is not described above, detects a moving area specification position input on the touch screen 105. Under the control of the controller 115, the moving area specification position information detected through the input position detection unit 110 is transmitted as moving area coordinate information. Under the control of the controller 115, total flooring coordinate information (nXm) transmitted from the robot body 200 is stored and managed in the memory 130.

A description will now be given of the cleaning robot body 200, the movement of which is controlled by the remote controller 100 constructed as described above.

As with the general robot body, the self-moving robot body 200 according to the embodiment of the present invention includes a sensor unit 210 having a plurality of sensors for sensing obstacles and cliffs. For movement of the robot body 200, the self-moving robot body 200 further includes a left/right wheel motor drive unit 220 and rotation amount detectors (for example, rotation counters) 230. The left/right wheel motor drive unit 220 drives left and right wheel motors M according to drive control signals received from a body controller 240 described below. The rotation amount detectors 230 are coupled respectively to left and right wheels to detect the rotation amounts of the left and right wheels and then to feed data of the number of rotations corresponding to the rotation amounts back to the body controller 240.

The cleaning robot body 200 according to the embodiment of the present invention further includes a wireless communication unit 240 for wireless communication with the remote controller 100. As described above for the remote controller 100, this wireless communication module 250 may be embodied as an infrared transmitter, a wireless local area communication module such as a Bluetooth module, a wireless LAN module, or a Zigbee module, or the like. Of course, the wireless communication module 250 may also include a variety of communication modules complying with different communication protocols in order to communicate with a variety of devices.

The cleaning robot body 200 further includes a printed information reader 260. The printed information reader 260 is mounted on a lower portion of the body 200 as shown in FIG. 5 to read coordinate information elements printed with colorless or secret ink which produces a color when receiving light emitted from a light emitting element 260'. Each of the coordinate information elements is represented by a 2-dimensional barcode B as shown in FIG. 4. Of course, the coordinate information may be printed in other formats such as general barcodes.

The controller 240 controls the operation of the robot body 200 based on control program data stored in the memory 270. For example, the controller 240 controls the operation of the robot body 200 based on a plurality of program modules or units 241-245 as shown in FIG. 2.

Specifically, a moving area coordinate information extraction unit 241 extracts moving area coordinate information from a remote control signal received through the wireless communication module 250.

A moving start point setting unit 242 locates an adjacent coordinate information element from among a plurality of coordinate information elements included in the moving area coordinate information extracted by the moving area coordinate information extraction unit 241 and sets the located adjacent coordinate information as a moving start point.

A coordinate information tracking unit 243 controls the operation of left and right wheel motors M so that the body 200 moves to the moving start point set by the moving start point setting unit and the body 200 moves within the moving area while tracking all coordinate information elements present in the moving area.

The system of the cleaning robot body 200 may also be implemented by including a flooring coordinate information extraction unit 244 and a flooring coordinate information transmission unit 245, in addition to the moving area coordinate information extraction unit 241, the moving start point setting unit 242, and the coordinate information extraction unit 243. The flooring coordinate information extraction unit 244 extracts total coordinate information (nXm) of the coordinate information elements, which have been printed vertically and horizontally on the flooring, from the flooring coordinate information read by the printed information reader 260. The flooring coordinate information transmission unit 245 transmits the extracted total flooring coordinate information to the remote controller 100 through the wireless communication module 250.

A robot body, which simply receives coordinate information of a moving area and moves within the moving area while tracking coordinate information present in the moving area, can be assumed to be a self-moving robot system according to a first embodiment of the present invention.

A robot system, which includes a remote controller 100 having a memory where total coordinate information (n×m) printed on the flooring has been stored and a robot body which is controlled by the remote controller, can be assumed to be a self-moving robot system according to a second embodiment of the present invention.

A robot system, wherein a robot body obtains total coordinate information (n×m) printed on the flooring and transmits it to a remote controller 100, can be assumed to be a self-moving robot system according to a third embodiment of the present invention.

Now, operations of a self-moving robot system according to the embodiments of the present invention will be described in detail with reference to the accompanying drawings.

First, a description will be given of how the cleaning robot body 200 obtains and transmits total coordinate information (n×m) of the coordinate information elements, which have been printed vertically and horizontally on the flooring, to the remote controller 100.

A user places the cleaning robot body 200 on flooring 300 as shown in FIG. 4 and uses the remote controller 100 to move the robot body 200. It is assumed that 6×4 2-dimensional barcodes B have been printed vertically and horizontally (i.e., in a 6×4 matrix) on the flooring 300. It is also assumed that the 2-dimensional barcodes contain both their own position coordinate information, such as first coordinates (1,1), second coordinates (1,2), ..., and 24th coordinates (4,6), and total coordinate information (nXm) of the barcodes printed on the flooring. That is, each coordinate information element (i.e., each barcode) includes its position coordinate information and the total coordinate information.

When the robot body 200 moves on the flooring 300 under the above assumptions, the robot body 200 can read a coordinate information element (i.e., a 2-dimensional barcode) printed on the flooring 300 through the light emitting element 260' and the printed information reader 260 mounted on the bottom of the robot body 200 as shown in FIG. 5. Specifically, when the light emitting element 260' emits light of a specific wavelength range as power is applied to the light emitting element 260', the 2-dimensional barcode, which has been chemically treated so as to produce a color in response to the specific wavelength range, is detected by the printed information reader 260. The detected barcode information is transferred to the flooring coordinate information extraction unit 244. The flooring coordinate information extraction unit 244 then extracts total coordinate information of the coordinate information elements printed on the flooring from the detected barcode (coordinate) information and transfers the extracted total coordinate information to the flooring coordinate information transmitter 245. The flooring coordinate information transmitter 245 then wirelessly transmits the extracted total coordinate information as flooring coordinate information.

The flooring coordinate information wirelessly transmitted from the cleaning robot body 200 is received by the wireless communication module 125 in the remote controller 100 and is then stored in the memory 130 under the control of the controller 115.

A description will now be given of how a moving area is specified using the remote controller 100 that has received flooring coordinate information from the cleaning robot body 200 or using the remote controller 100 having a memory 130 in which flooring coordinate information has been stored by a manufacturer, a manager, or the like, and how the cleaning robot body 200 moves within the specified moving area.

When a user desires to specify a moving area, the user instructs the remote controller 100 to display flooring coordinate information. The controller 115 in the remote controller 100 then reads and displays flooring coordinate information stored in the memory 130 on the touch screen 105 which functions as a display unit. An example of the coordinate information displayed on the touch screen 105 is illustrated in FIG. 3. If n×m flooring coordinate information elements are displayed on the touch screen 105 as illustrated in FIG. 2, the user can input positions to specify a desired moving area on the touch screen 105. The positions for specifying the moving area can also be input using direction or number keys. In the embodiment of the present invention, it is assumed that the moving area is specified by 1st, 6th, 19th, and 24th coordinate information elements.

Once the user inputs the positions to specify the moving area as described above, the input position detection unit 110 detects and transfers the moving area specification position information to the controller 115. The controller 115 then sets the moving area specification position information as moving area coordinate information and transmits it to the cleaning robot body 200 through the wireless communication module 125.

The moving area coordinate information wirelessly transmitted from the remote controller 100 is transferred, as part of a remote control signal, to the coordinate information extraction unit 241 through the wireless communication module 250 of the robot body 200. The moving area coordinate information extraction unit 241 extracts the moving area coordinate information from the wirelessly received remote control signal, and transfers it to the moving start point setting unit 242. The moving start point setting unit 242 locates a coordinate information element near the current position from among a plurality of coordinate information elements included in the extracted moving area coordinate information, and sets the located coordinate information element as a moving start point. For example, when the coordinate information element currently read by the printed information reader 269 is (2,2) and the received moving area coordinate information elements are (1,1), (1,6), (4,1), and (4,6), the moving start point setting unit 242 sets the coordinates (1,1) as the coordinates of the moving start point.

When the moving start point has been set, the coordinate information tracking unit 243 controls the operation of the motors so that the body 200 moves to the moving start point. When the robot body 200 has moved to the moving start point, the coordinate information tracking unit 243 controls the operation of the motor so that the body 200 moves within the moving area set by the user while tracking all coordinate information elements present in the set moving area.

Accordingly, the cleaning robot body 200 can normally clean the area specified by the user.

The embodiments of the present invention have been described assuming that the remote controller 100 and the cleaning robot body 200 constitute a single self-moving robot system. However, a mobile communication terminal or a home network device capable of performing wireless local area communication, which is not an accessory of the cleaning robot body 200, may also be set as the remote controller 100 and be combined with the cleaning robot body 200 to constitute a single self-moving robot system. This is possible since electrical household appliances or communication devices having a wireless local area communication module or mobile communication terminals such as mobile phones or PDAs, which comply with different communication protocols, can control the movement of the cleaning robot body 200 according to the operating principle described above.

As is apparent from the above description, a robot system according to the present invention has a variety of advantages. For example, a robot body locates and moves to a coordinate information element near its current position from among a plurality of coordinate information elements included in the moving area coordinate information transmitted from a remote controller, and moves within the moving area while tracking the coordinate information elements present in the moving area, so that it is possible to conveniently limit movement of the robot body without requiring separate equipment and without causing inconvenience to the user.

Further, since total coordinate information including the total number of coordinate information elements printed vertically and horizontally on flooring can be transmitted to the remote controller, the remote controller can store the total coordinate information in a memory and use it when setting a moving area, so that it is possible to appropriately adapt to situations such as replacement of the flooring.

In addition, since the total coordinate information can be wirelessly transmitted to a portable device capable of communicating with the robot body, the portable device can be used as a remote controller capable of setting a moving area, so that it is possible to normally control movement of the robot body, in spite of loss or failure of the remote controller.

## Claims

1. A self-moving robot system comprising:
a remote controller (100) for performing wireless communication with a self-moving robot body (200); and
the self-moving robot body (200) for extracting moving area coordinate information from a remote control signal wirelessly received from the remote controller (100), reading coordinate information printed on flooring, and moving while tracking the extracted moving area coordinate information on the flooring, **characterized in that** the remote controller (100) extracts and displays a plurality of previously stored coordinate information elements printed on flooring, sets a series of coordinate information elements input by a user as moving area coordinate information, and transmits the moving area coordinate information to the self-moving robot body (200).

2. The self-moving robot system according to claim 1, wherein the self-moving robot body (200) includes:
a printed information reader (260) for reading the coordinate information printed on the flooring;
a moving area coordinate information extraction unit (241) for extracting the moving area coordinate information from the remote control signal wirelessly received from the remote controller (100);
a moving start point setting unit for setting, as a moving start point, a coordinate information element nearest to the self-moving robot body (200) from among a plurality of coordinate information elements included in the extracted moving area coordinate information; and
a coordinate information tracking unit (243) for controlling the operation of a motor so that the self-moving robot body (200) moves to the moving start point and then moves while tracking the moving area coordinate information on the flooring.

3. The self-moving robot system according to claim 2, wherein the coordinate information printed on the flooring includes a plurality of coordinate information elements and each of the coordinate information elements includes both total coordinate information of the coordinate information elements printed on the flooring and position coordinate information of the coordinate information element.

4. The self-moving robot system according to claim 2, wherein the self-moving robot body (200) further includes:
a flooring coordinate information extraction unit (244) for extracting total coordinate information of a plurality of coordinate information elements printed on the flooring from the coordinate information read by the printed information reader (260); and
a flooring coordinate information transmission unit (245) for transmitting the extracted total coordinate information as flooring coordinate information to the remote controller (100) through a wireless communication module (250).

5. The self-moving robot system according to claim 2, wherein the remote controller (100) includes:
a wireless communication (125) module for performing wireless communication with the self-moving robot body (200);
a memory (130) for storing the coordinate information printed on the flooring;
a display unit for displaying the coordinate information;
a data input unit for receiving information for setting a moving area, input by a user; and
a control unit (115) for controlling overall operations of the remote controller (100) to store and display the coordinate information and to wirelessly transmit the coordinate information to the self-moving robot body (200).

6. The self-moving robot system according to claim 5, wherein the data input unit includes one or both of a touch screen (105) and a key input unit (120).

7. The self-moving robot system according to claim 6, wherein the remote controller (100) further includes:
an input position detection unit (110) for detecting a position input on the touch screen (105) as a position to specify a moving area and outputting the moving area specification position information to the control unit (115).

8. A method of operating a self-moving robot system according to any of claims 1 to 7.

## Patentansprüche

1. Sich selbständig bewegendes Robotersystem, welches Folgendes aufweist:
eine Fernsteuerung (100) zum Ausführen einer drahtlosen Kommunikation mit einem sich selbständig bewegenden Roboterkörper (200) und
den sich selbständig bewegenden Roboterkörper (200) zum Extrahieren von Bewegungsbereichkoordinateninformationen aus einem von der Fernsteuerung (100) drahtlos empfangenen Fernsteuersignal, zum Lesen von auf einem Boden abgedruckten Koordinateninformationen und zum Bewegen während des Verfolgens der extrahierten Bewegungsbereichkoordinateninformationen auf dem Boden, **dadurch gekennzeichnet, dass** die Fernsteuerung (100) mehrere zuvor gespeicherte auf dem Boden abgedruckte Koordinateninformationselemente extrahiert und anzeigt, eine Reihe von einem Benutzer eingegebener Koordinateninformationselemente als Bewegungsbereichkoordinateninformationen festlegt und die Bewegungsbereichkoordinateninformationen zum sich selbständig bewegenden Roboterkörper (200) sendet.

2. Sich selbständig bewegendes Robotersystem nach Anspruch 1, wobei der sich selbständig bewegende Roboterkörper (200) Folgendes aufweist:
einen Leser (260) gedruckter Informationen zum Lesen der auf dem Boden abgedruckten Koordinateninformationen,
eine Bewegungsbereichkoordinateninformationsextraktionseinheit (241) zum Extrahieren der Bewegungsbereichkoordinateninformationen aus dem von der Fernsteuerung (100) drahtlos empfangenen Fernsteuersignal,
eine Bewegungsanfangspunktfestlegungseinheit zum Festlegen als einen Bewegungsanfangspunkt eines Koordinateninformationselements, das dem sich selbständig bewegenden Roboterkörper (200) aus mehreren in den extrahierten Bewegungsbereichkoordinateninformationen enthaltenen Koordinateninformationselementen am nächsten liegt, und
eine Koordinateninformationsverfolgungseinheit (243) zum Steuern des Betriebs eines Motors, so dass sich der sich selbständig bewegende Roboterkörper (200) zum Bewegungsanfangspunkt bewegt und sich dann bewegt, während er die Bewegungsbereichkoordinateninformationen auf dem Boden verfolgt.

3. Sich selbständig bewegendes Robotersystem nach Anspruch 2, wobei die auf dem Boden abgedruckten Koordinateninformationen mehrere Koordinateninformationselemente aufweisen und jedes der Koordinateninformationselemente sowohl Gesamtkoordinateninformationen der auf dem Boden abgedruckten Koordinateninformationselemente als auch Positionskoordinateninformationen des Koordinateninformationselements aufweist.

4. Sich selbständig bewegendes Robotersystem nach Anspruch 2, wobei der sich selbständig bewegender Roboterkörper (200) ferner Folgendes aufweist:
eine Bodenkoordinateninformationsextraktionseinheit (244) zum Extrahieren von Gesamtkoordinateninformationen mehrerer auf dem Boden abgedruckter Koordinateninformationselemente aus den vom Leser (260) gedruckter Informationen gelesenen Koordinateninformationen und
eine Bodenkoordinateninformationssendeeinheit (245) zum Senden der extrahierten Gesamtkoordinateninformationen als Bodenkoordinateninformationen zur Fernsteuerung (100) durch ein Drahtloskommunikationsmodul (250).

5. Sich selbständig bewegendes Robotersystem nach Anspruch 2, wobei die Fernsteuerung (100) Folgendes aufweist:
ein Drahtloskommunikationsmodul (125) zum Ausführen einer drahtlosen Kommunikation mit dem sich selbständig bewegenden Roboterkörper (200),
einen Speicher (130) zum Speichern der auf dem Boden abgedruckten Koordinateninformationen,
eine Anzeigeeinheit zum Anzeigen der Koordinateninformationen,
eine Dateneingabeeinheit zum Empfangen von einem Benutzer eingegebener Informationen zum Festlegen eines Bewegungsbereichs und
eine Steuereinheit (115) zum Steuern der Gesamtoperationen der Fernsteuerung (100) zum Steuern und Anzeigen der Koordinateninformationen und zum drahtlosen Senden der Koordinateninformationen zum sich selbständig bewegenden Roboterkörper (200).

6. Sich selbständig bewegendes Robotersystem nach Anspruch 5, wobei die Dateneingabeeinheit einen oder beide von einem Berührungsbildschirm (105) und einer Tasteneingabeeinheit (120) aufweist.

7. Sich selbständig bewegendes Robotersystem nach Anspruch 6, wobei die Fernsteuerung (100) ferner aufweist:
eine Eingabepositionserfassungseinheit (110) zum Erfassen einer auf dem Berührungsbildschirm (105) eingegebenen Position als eine Position zum Spezifizieren eines Bewegungsbereichs und zum Ausgeben der Bewegungsbereichsspezifikationspositionsinformationen an die Steuereinheit (115).

8. Verfahren zum Betreiben eines sich selbständig bewegenden Robotersystems nach einem der Ansprüche 1 bis 7.

## Revendications

1. Système robotisé automoteur comprenant :
une télécommande (100) pour effectuer une communication sans fil avec un corps robotisé automoteur (200) ; et
le corps robotisé automoteur (200) pour extraire des informations de coordonnées de zone de déplacement à partir d'un signal de télécommande reçu sans fil en provenance de la télécommande (100), pour lire des informations de coordonnées imprimées sur un revêtement de sol, et pour effectuer un déplacement en suivant les informations de coordonnées de zone de déplacement extraites sur le revêtement de sol, **caractérisé en ce que** la télécommande (100) extrait et affiche une pluralité d'éléments d'informations de coordonnées imprimés sur le revêtement de sol précédemment mémorisés, règle une série d'éléments d'informations de coordonnées entrés par un utilisateur en tant qu'informations de coordonnées de zone de déplacement, et transmet les informations de coordonnées de zone de déplacement au corps robotisé automoteur (200).

2. Système robotisé automoteur selon la revendication 1, dans lequel le corps robotisé automoteur (200) comprend :
un lecteur d'informations imprimées (260) pour lire les informations de coordonnées imprimées sur le revêtement de sol ;
une unité d'extraction d'informations de coordonnées de zone de déplacement (241) pour extraire les informations de coordonnées de zone de déplacement à partir du signal de télécommande reçu sans fil en provenance de la télécommande (100) ;
une unité de réglage de point de départ de déplacement pour régler, en tant que point de départ de déplacement, un élément d'informations de coordonnées le plus proche du corps robotisé automoteur (200) parmi une pluralité d'éléments d'informations de coordonnées inclus dans les informations de coordonnées de zone de déplacement extraites ; et
une unité de suivi d'informations de coordonnées (243) pour commander le fonctionnement d'un moteur de telle sorte que le corps robotisé automoteur (200) se déplace au point de début de déplacement puis se déplace en suivant les informations de coordonnées de zone de déplacement sur le revêtement de sol.

3. Système robotisé automoteur selon la revendication 2, dans lequel les informations de coordonnées imprimées sur le revêtement de sol comprennent une pluralité d'éléments d'informations de coordonnées et chacun des éléments d'informations de coordonnées comprend à la fois des informations de coordonnées totales des éléments d'informations de coordonnées imprimés sur le revêtement de sol et des informations de coordonnées de position de l'élément d'informations de coordonnées.

4. Système robotisé automoteur selon la revendication 2, dans lequel le corps robotisé automoteur (200) comprend en outre :
une unité d'extraction d'informations de coordonnées de revêtement de sol (244) pour extraire des informations de coordonnées totales d'une pluralité d'éléments d'informations de coordonnées imprimés sur le revêtement de sol à partir des informations de coordonnées lues par le lecteur d'informations imprimées (260) ; et
une unité de transmission d'informations de coordonnées de revêtement de sol (245) pour transmettre les informations de coordonnées totales extraites en tant qu'informations de coordonnées de revêtement de sol à la télécommande (100) par l'intermédiaire d'un module de communication sans fil (250).

5. Système robotisé automoteur selon la revendication 2, dans lequel la télécommande (100) comprend :
un module de communication sans fil (125) pour effectuer une communication sans fil avec le corps robotisé automoteur (200) ;
une mémoire (130) pour mémoriser les informations de coordonnées imprimées sur le revêtement de sol ;
une unité d'affichage pour afficher les informations de coordonnées ;
une unité d'entrée de données pour recevoir des informations pour régler une zone de déplacement, entrées par un utilisateur ; et
une unité de commande (115) pour commander des opérations globales de la télécommande (100) afin de mémoriser et d'afficher les informations de coordonnées et de transmettre sans fil les informations de coordonnées au corps robotisé automoteur (200).

6. Système robotisé automoteur selon la revendication 5, dans lequel l'unité d'entrée de données comprend l'un ou les deux d'un écran tactile (105) et d'une unité d'entrée à touches (120).

7. Système robotisé automoteur selon la revendication 6, dans lequel la télécommande (100) comprend en outre :
une unité de détection de position d'entrée (110) pour détecter une position entrée sur l'écran tactile (105) en tant que position pour spécifier une zone de déplacement, et pour délivrer les informations de position de spécification de zone de déplacement à l'unité de commande (115).

8. Procédé de fonctionnement d'un système robotisé automoteur selon l'une quelconque des revendications 1 à 7.
